# EUROPEAN PATENT APPLICATION

(11) **EP 4 395 044 A1**
(43) Date of publication of application: **03.07.2024**
(21) Application number: 22860552.3
(22) Date of filing: 24.08.2022
(51) Int. Cl.: H01M 50/507, H01M 50/202

(54) **COPPER BAR ISOLATION SUPPORT, BATTERY PACK, AND VEHICLE**

(30) Priority: 27.08.2021 CN 202122053349 U
(71) Applicant: Beijing CHJ Information Technology Co., Ltd., Beijing 101399 (CN)
(72) Inventor: ZHAO, Taozheng, Beijing 101399 (CN)
(74) Representative: Maiwald GmbH
(86) International application number: PCT/CN2022/114585
(87) International publication number: WO 2023/025206

(57) **Abstract**

The present invention relates to a copper bar isolation support, a battery pack and a vehicle. The copper bar isolation support comprises a supporting portion, a connecting portion and a fixing portion. The connecting portion is provided between the supporting portion and the fixing portion, and is separately connected to the supporting portion and the fixing portion; the fixing portion is provided with a fixing device, and the fixing device is configured to fix a first copper bar on the fixing portion; a spacing for accommodating the first copper bar and the fixing device is formed between the supporting portion and the fixing portion; and a gap is formed between the fixing device and the supporting portion; the supporting portion is configured to support a second copper bar.

## Description

### CROSS-REFERENCE TO RELATED APPLICATIONS

This application is based on and claims the priority of Chinese patent application No. 202122053349.X filed on August 27, 2021, the entire contents of which are incorporated herein by reference.

### FIELD

The present disclosure relates to the field of copper bar fixing, and in particular to a copper bar isolation bracket, a battery pack and a vehicle.

### BACKGROUND

With the development of electric vehicle technology, power battery packs pursue higher packing efficiency and safer structure. After a copper bar is fixed, a bolt head is easy to cause abrasion of an insulation layer of an adjacent copper bar, resulting in insulation and short circuit problems. For these problems, a bolt head protecting cap and a copper bar protecting cap are generally used. The bolt head protecting cap is made of plastic, and a transition fit is generally formed between the bolt head protecting cap and the bolt head, which is only suitable for a static state and is easy to loosen and fall off in a non-static state. There is still a risk of abrasion and wear-through due to the contact between the bolt head protecting cap and the adjacent copper bar. The copper bar protecting cap is made of silica gel. There is no risk that the copper bar protecting cap will fall off as it is sleeved on the copper bar. However, since the bolt head, the copper bar protecting cap and the adjacent copper bar are not separated, there is still a risk that the bolt head will wear the insulation layer of the adjacent copper bar after wearing through the copper bar protecting cap.

### SUMMARY

In order to solve or at least partially solve the above technical problems, the present disclosure provides a copper bar isolation bracket, a battery pack and a vehicle.

The present disclosure provides a copper bar isolation bracket, which includes a supporting portion, a connecting portion and a fixing portion.

The connecting portion is arranged between the supporting portion and the fixing portion, and is separately connected to the supporting portion and the fixing portion. The fixing portion is provided with a fixing device, and the fixing device is configured to fix a first copper bar on the fixing portion. Spacing for accommodating the first copper bar and the fixing device is defined between the supporting portion and the fixing portion, and a gap is defined between the fixing device and the supporting portion. The supporting portion is configured to support a second copper bar.

In some embodiments, the fixing portion includes a fixing plate, the fixing plate is fixedly connected to the connecting portion, and the fixing device is arranged on the fixing plate.

In some embodiments, the fixing device includes a through hole defined in the fixing plate, and a nut is arranged in the through hole.

In some embodiments, a width of the fixing plate is smaller than a width of the connecting portion.

In some embodiments, the supporting portion includes a baffle connected to the connecting portion, the baffle extends away from the connecting portion, and the baffle and the fixing portion are parallel to each other.

In some embodiments, the baffle and the fixing portion are located at a same side of the connecting portion.

In some embodiments, two baffles are provided, the two baffles are spaced from each other, an interval space is defined between the two baffles, and the interval space is arranged opposite to the fixing device.

In some embodiments, the connecting portion is a connecting plate, and the connecting plate has an upper end connected to the supporting portion and a lower end connected to the fixing portion.

In some embodiments, the connecting portion is configured as a rod-like structure.

In some embodiments, the copper bar isolation bracket is integrally molded.

In some embodiments, the supporting portion, the connecting portion and the fixing portion are integrally molded, and the nut in the through hole of the fixing portion is formed by placing the nut in the through hole to embed the nut in the through hole during integral molding.

The present disclosure also provides a battery pack including the copper bar isolation bracket.

The present disclosure also provides a vehicle including the battery pack.

According to the copper bar isolation bracket provided by the present disclosure, by arranging the fixing portion and arranging the fixing device on the fixing portion, the bracket and the first copper bar are fixed by the fixing device at the same time. By arranging the supporting portion, arranging the connecting portion between the supporting portion and the fixing portion, and supporting the second copper bar on the supporting portion, with the spacing for accommodating the first copper bar and the fixing device being defined between the supporting portion and the fixing portion, and the gap being defined between the fixing device and the supporting portion, the first copper bar is isolated from the second copper bar to prevent the fixing device for fixing the first copper bar from contacting with the second copper bar and from causing the second copper bar to wear, thereby prolonging the service life of the copper bar and reducing the use cost.

### BRIEF DESCRIPTION OF THE DRAWINGS

The accompanying drawings, which are incorporated in and constitute a part of this specification, illustrate embodiments consistent with the present disclosure and together with the description, serve to explain the principles of the present disclosure.

The drawings needed in the description are briefly introduced. Obviously, for ordinary technicians in the field, other drawings may be obtained according to these drawings without paying inventive labor.
FIG. 1 is a schematic structural view of a copper bar isolation bracket according to an embodiment of the present disclosure;
FIG. 2 is a schematic structural view of a copper bar isolation bracket according to an embodiment of the present disclosure in another angle; and
FIG. 3 is a schematic view a copper bar isolation bracket according to an embodiment of the present disclosure after installation.

### Reference numerals:

10 supporting portion; 11 baffle; 12 interval space; 20 connecting portion; 21 connecting plate; 30 fixing portion; 31 fixing device; 311 through hole; 312 nut; 313 bolt; 32 fixing plate; 40 first copper bar; 50 second copper bar; 60 third copper bar.

### DETAILED DESCRIPTION

In order to understand the above objects, features and advantages of the present disclosure more clearly, the solution of the present disclosure will be further described below. It should be noted that the embodiments of the present disclosure and the features in the embodiments may be combined with each other without conflict.

In the following description, many specific details are set forth in order to fully understand the present disclosure, but the present disclosure may be practiced in other ways than those described herein. Obviously, the embodiments in the specification are only part of the embodiments of the present disclosure, not all of them.

The terms "up", "down", "left", "right", "front" and "rear" described in the embodiments indicate the orientation or positional relationship based on the orientation or positional relationship shown in the attached drawings, which is only for the convenience of describing the embodiments and simplifying the description, and does not indicate or imply that the device or element referred to must have a specific orientation, be constructed and operated in a specific orientation, so it cannot be understood as a limitation of the present disclosure.

The copper bar isolation bracket provided by the present disclosure is used for isolating two adjacent copper bars in an automobile, to prevent the interaction between the two adjacent copper bars, and prevent damaging the copper bars and affecting the service life of the copper bars. In actual use, the copper bar isolation bracket may also be arranged on other devices according to actual needs.

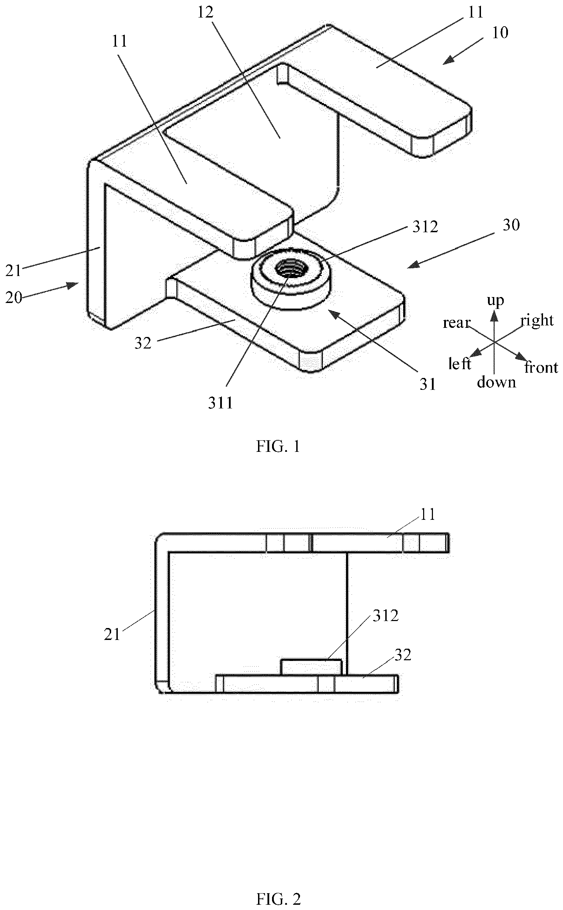

As shown in FIGS. 1 and 2, a copper bar isolation bracket of the present disclosure includes a supporting portion 10, a connecting portion 20 and a fixing portion 30.

The connecting portion 20 is arranged between the supporting portion 10 and the fixing portion 30, and is separately connected to the supporting portion 10 and the fixing portion 30. The supporting portion 10 is located above the fixing portion 30, and the fixing portion 30 is provided with a fixing device 31. The fixing device 31 is configured to fix a first copper bar 40 on the fixing portion 30. Spacing for accommodating the first copper bar 40 and the fixing device 31 is defined between the supporting portion 10 and the fixing portion 30, and a gap is defined between the fixing device 31 and the supporting portion 10. The supporting portion 10 is configured to support a second copper bar 50.

According to the copper bar isolation bracket provided by the present disclosure, by arranging the fixing portion 30 and arranging the fixing device 31 on the fixing portion 30, the bracket and the first copper bar 40 are fixed by the fixing device 31 at the same time. By arranging the supporting portion 10, arranging the connecting portion 20 between the supporting portion 10 and the fixing portion 30, and supporting the second copper bar 50 on the supporting portion 10, with the spacing for accommodating the first copper bar 40 and the fixing device 31 being defined between the supporting portion 10 and the fixing portion 30, and the gap being defined between the fixing device 31 and the supporting portion 10, the first copper bar 40 is separated from the second copper bar 50, to prevent the fixing device 31 for fixing the first copper bar 40 from contacting with the second copper bar 50 and from causing the second copper bar 50 to wear, thereby prolonging the service life of the copper bar and reducing the cost.

In some embodiments, the fixing portion 30 includes a fixing plate 32, the fixing plate 32 has a rectangular structure, and the fixing plate 32 is fixedly connected to the connecting portion 20. The fixing device 31 is arranged on the fixing plate 32, and the fixing plate 32 is fixed to an automobile through the fixing device 31, and the first copper bar 40 is also fixed to the fixing plate 32 through the fixing device 31.

Further, the fixing device 31 includes a through hole 311 defined in the fixing plate 32, and a bolt 313 passes through the through hole 311 and is fixed to the automobile to fix the copper bar isolation bracket, and at the same time, a fixing hole is defined in the first copper bar 40, and the bolt passes through the fixing hole to fix the first copper bar 40 to the fixing plate 32.

In some embodiments, a nut 312 fitting with the bolt 313 may be arranged in the through hole 311 in the fixing plate 32, and the nut 312 is fixed in the through hole 311, so that when the bolt 313 fixes the fixing plate 32 and the first copper bar 40, the bolt 313 may be screwed onto the nut 312, ensuring the stability of fixing the bolt 313 with the fixing plate 32 and also the stability of fixing the first copper bar 40 on the fixing plate 32 by the bolt 313. The first copper bar 40 may be stably fixed on the fixing plate 32 without shaking even if the automobile shakes during driving.

At the same time, the connecting portion 20 has a certain height. When the first copper bar 40 and the fixing plate 32 are fixed by the bolt 313, it may be ensured that a top end of the bolt 313 will not touch the second copper bar 50 above it, thus preventing the second copper bar 50 from being worn and damaged by collision of the bolt 313, and prolonging the service life of the copper bar.

In some other embodiments, other implementable structures may also be adopted for fixing the first copper bar 40. For example, a collar may be fixed on the fixing plate 32, and a tightening device is arranged on the collar. The first copper bar 40 is fitted into the collar, and the first copper bar 40 is tightened in the collar by the tightening device, so that the first copper bar 40 is fixed. The copper bar isolation bracket is fixed on the automobile by a bolt or snap. For another example, a snap structure may be arranged on the fixing plate 32, and the first copper bar 40 may be fixed on the fixing plate 32 through the snap structure.

In some embodiments, a width of the fixing plate 32 is smaller than a width of the connecting portion 20, and the width of the fixing plate 32 refers to an extending direction along a connection joint between the fixing plate 32 and the connecting portion 20. In this embodiment, the function of the fixing plate 32 is to fix the copper bar isolation bracket and the first copper bar 40, so the width of the fixing plate 32 only needs to accommodate the through hole 311 and provide stable support for the connecting portion 20 and the supporting portion 10. Therefore, in this embodiment, on the basis of ensuring the above requirements, the width of the fixing plate 32 is set to be smaller than the width of the connecting portion 20, to occupy the limited space inside the automobile as little as possible and not interfere with the installation or layout of other devices, so that the layout of the devices inside the automobile is more reasonable, the layout of the devices may be more flexible, and the devices may be laid out by bending or other manners according to actual needs.

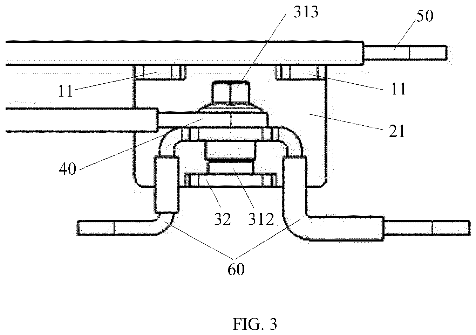

As shown in FIG. 3, in this embodiment, the fixing device 31 may not only fix the first copper bus 40, but also fix the third copper bar 60, or other components that need to be fixed, thus achieving the purpose of fixing a plurality of components through one fixing device 31, saving a lot of space inside the automobile and maximizing the utilization of the fixing device 31.

In some embodiments, the supporting portion 10 includes a baffle 11 connected to the connecting portion 20, the baffle 11 extends away from the connecting portion 20, and the baffle 11 and the fixing portion 30 are parallel to each other. An extending direction of the baffle 11 is perpendicular to the width direction of the connecting portion 20. The second copper bar 50 is placed on the baffle 11. The second copper bar 50 is not in a freely movable state, and other parts of the second copper bar 50 may be fixed as required. In this embodiment, only a part of the second copper bar 50 located at the copper bar isolation bracket is placed on the baffle 11, to isolate the first copper bar 40 from the second copper bar 50.

In some embodiments, the connecting portion 20 and the fixing plate 32 are perpendicular to each other, so that the fixing plate 32 and the baffle 11 are parallel to each other. The connecting portion 20 has enough height to ensure that the fixing device 31 on the fixing plate 32 will not touch the second copper bar 50, which ensures that the shaking of the automobile will not make the fixing device 31 touch the second copper bar 50 during the driving of the automobile, thus effectively prolonging the service life of the second copper bar 50.

In this embodiment, the baffle 11 and the fixing portion 30 are located at a same side of the connecting portion 20, that is, the baffle 11 is located directly above the fixing portion 30, to reduce the space occupied by the copper bar isolation bracket and ensure the overall stability of the copper bar isolation bracket.

Further, the number of baffles 11 is two, and the two baffles 11 have are completely the same length and width. The two baffles 11 are arranged in parallel and spaced apart from each other, and an interval space 12 is defined between the two baffles 11. When the second copper bar 50 is placed on the baffle 11, it contacts the two baffles 11 at the same time to share the weight of the second copper bar 50, so that the weight of the second copper bar 50 will not be completely applied to one baffle 11, and the baffle 11 will be prevented from being damaged due to the excessive weight of the second copper bar 50.

In some embodiments, the interval space 12 is arranged opposite to the fixing device 31, that is, the interval space 12 is located directly above the fixing device 31. When the first copper bar 40 is fixed or disassembled, an operator may operate the bolt 313 on the fixing plate 32 in the space between the baffle 11 and the fixing plate 32, or operate the bolt 313 through the interval space 12 when the space in the automobile is limited.

In some other embodiments, the number of the baffles 11 may be set according to actual needs. For example, a plurality of baffles 11 may be provided, and the plurality of baffles 11 are arranged in parallel with each other. When the second copper bar 50 is placed on the baffles 11, it contacts with the plurality of baffles 11, thus the plurality of baffles 11 share the weight of the second copper bar 50.

In addition, in some other embodiments, the baffle 11 and the fixing portion 30 may also be arranged on two sides of the connecting portion 20 when the internal space of the automobile allows. In this way, the first copper bar 40 and the second copper bar 50 are respectively arranged on two sides of the connecting portion 20, and the fixing device 31 for fixing the first copper bar 40 will not affect the second copper bar 50 at all. At the same time, in order to ensure the stability of placing the second copper bar 50, the fixing device 31 may also be arranged on the baffle 11 to fix the second copper bar 50 on the fixing device 31 on the baffle 11 to prevent the second copper bar 50 from sliding on the baffle 11 and colliding with other devices and thus from being damaged.

Further, when the plurality of baffles 11 are provided, the baffles 11 may also be arranged on two sides of the connecting portion 20, and the baffles 11 are arranged parallel to each other and spaced from each other, to increase the width of the second copper bar 50 placed on the baffles 11 and ensure that the second copper bar 50 will not slip off the baffles 11.

In some embodiments, the connecting portion 20 is a connecting plate 21, the connecting plate is vertically arranged, and has an upper end connected to the supporting portion 10 and a lower end connected to the fixing portion 30.

In some other embodiments, the connecting portion 20 may also be configured as a rod-like structure.

Further, the copper bar isolation bracket is integrally molded, that is, the supporting portion 10, the connecting portion 20 and the fixing portion 30 are integrally molded. The nut 312 in the through hole 311 of the fixing portion 30 is formed by placing the nut 312 in the through hole 311 to embed the nut 312 in the through hole during integral molding.

In this embodiment, the copper bar isolation bracket is made of nonmetal material to prevent short circuit between the copper bar isolation bracket and the copper bar. In some other embodiments, the copper bar isolation bracket may also be made of metal, and a layer of insulating paint is coated on an outer surface of the metal to prevent short circuit between the copper bar and the copper bar isolation bracket.

The present disclosure also provides a battery pack, which includes the copper bar isolation bracket described above. By using the copper bar isolation bracket on the battery pack to isolate the two adjacent copper bars, it is effectively prevented the adjunct copper bars from being damaged due to interaction between the fixing device 31 on the copper bar and the adjacent copper bar caused by the shaking of the two adjacent copper bars during the driving of the vehicle.

The present disclosure also provides a vehicle including the battery pack described above. By arranging the battery pack with the copper bar isolation bracket on the vehicle, it may effectively prevent the adjacent copper bars from being damaged due to the interaction between the fixing devices 31 on the copper bar and the adjacent copper bars caused by the shaking of two adjacent copper bars on the battery pack during the driving of the vehicle.

It should be noted that in this disclosure, relational terms such as "first" and "second" are only used to distinguish one entity or operation from another entity or operation, and do not necessarily require or imply that there is any such actual relationship or order between these entities or operations. Moreover, the terms "comprising", "including" or any other variation thereof are intended to cover non-exclusive inclusion, so that a process, method, article or device including a series of elements includes not only those elements, but also other elements not explicitly listed or elements inherent to such process, method, article or device. Without further restrictions, an element defined by the phrase "including ..." does not exclude the existence of other identical elements in the process, method, article or device including the element.

What has been described above is only the specific embodiments of the present disclosure, so that those skilled in the art may understand or realize the present disclosure. Many modifications to these embodiments will be obvious to those skilled in the art, and the general principles defined herein may be implemented in other embodiments without departing from the spirit or scope of this disclosure. Therefore, this disclosure will not be limited to the embodiments described herein, but is to be accorded the widest scope consistent with the principles and novel features disclosed herein.

## Claims

1. A copper bar isolation bracket, comprising a supporting portion (10), a connecting portion (20) and a fixing portion (30),
wherein the connecting portion (20) is arranged between the supporting portion (10) and the fixing portion (30), and is separately connected to the supporting portion (10) and the fixing portion (30); the fixing portion (30) is provided with a fixing device (31), and the fixing device (31) is configured to fix a first copper bar (40) on the fixing portion (30); spacing for accommodating the first copper bar (40) and the fixing device (31) is defined between the supporting portion (10) and the fixing portion (30), and a gap is defined between the fixing device (31) and the supporting portion (10); and the supporting portion (10) is configured to support a second copper bar (50).

2. The copper bar isolation bracket according to claim 1, wherein the fixing portion (30) comprises a fixing plate (32), the fixing plate (32) is fixedly connected to the connecting portion (20), and the fixing device (31) is arranged on the fixing plate (32).

3. The copper bar isolation bracket according to claim 2, wherein the fixing device (31) comprises a through hole (311) defined in the fixing plate (32), and a nut (312) is arranged in the through hole (311).

4. The copper bar isolation bracket according to claim 2, wherein a width of the fixing plate (32) is smaller than a width of the connecting portion (20).

5. The copper bar isolation bracket according to any one of claims 1 to 4, wherein the supporting portion (10) comprises a baffle (11) connected to the connecting portion (20), the baffle (11) extends away from the connecting portion (20), and the baffle (11) and the fixing portion (30) are parallel to each other.

6. The copper bar isolation bracket according to claim 5, wherein the baffle (11) and the fixing portion (30) are located at a same side of the connecting portion (20).

7. The copper bar isolation bracket according to claim 5, wherein two baffles (11) are provided, the two baffles (11) are spaced apart from each other, an interval space (12) is defined between the two baffles (11), and the interval space (12) is arranged opposite to the fixing device (31).

8. The copper bar isolation bracket according to any one of claims 1 to 7, wherein the connecting portion (20) is a connecting plate (21), and the connecting plate (21) has an upper end connected to the supporting portion (10) and a lower end connected to the fixing portion (30).

9. The copper bar isolation bracket according to any one of claims 1 to 8, wherein the connecting portion (20) is configured as a rod-like structure.

10. The copper bar isolation bracket according to any one of claims 1 to 9, wherein the copper bar isolation bracket is integrally molded.

11. The copper bar isolation bracket according to claim 3, wherein the supporting portion (10), the connecting portion (20) and the fixing portion (30) are integrally molded, and the nut (312) in the through hole (311) of the fixing portion (30) is formed by placing the nut (312) in the through hole (311) to embed the nut (312) in the through hole (311) during integral molding.

12. A battery pack, comprising a copper bar isolation bracket according to any one of claims 1 to 11.

13. A vehicle, comprising a battery pack according to claim 12.
